# EUROPÄISCHE PATENTSCHRIFT

(11) **EP 2 526 601 B1**
(45) Veröffentlichungstag und Bekanntmachung des Hinweises auf die Patenterteilung: **15.05.2019**
(21) Anmeldenummer: 11701497.7
(22) Anmeldetag: 20.01.2011
(51) Int. Cl.: H02H 3/04, H02H 7/085

(54) **ELEKTRONISCHER ÜBERSTROMAUSLÖSER FÜR SCHUTZSCHALTER**
ELECTRONIC OVERLOAD TRIPPING DEVICE FOR PROTECTIVE SWITCH
DÉCLENCHEUR ÉLECTRONIQUE À MAXIMUM DE COURANT POUR APPAREIL DE PROTECTION

(30) Priorität: 21.01.2010 DE 202010001197 U
(43) Veröffentlichungstag der Anmeldung: 28.11.2012
(73) Patentinhaber: Eaton Intelligent Power Limited, Dublin 4 (IE)
(72) Erfinder: MEID, Wolfgang, 56218 Mülheim-Kärlich (DE)
(74) Vertreter: Eaton IP Group EMEA
(86) Internationale Anmeldenummer: PCT/EP2011/050759
(87) Internationale Veröffentlichungsnummer: WO 2011/089186

(56) Entgegenhaltungen:
- EP-A2- 0 774 821
- DE-A1- 19 602 122
- DE-A1- 19 834 469
- DE-A1-102006 011 713
- DE-C1- 10 209 068
- US-A- 4 870 532

## Beschreibung

Die Erfindung betrifft einen elektronischen Überstromauslöser für Schutzschalter, insbesondere für Motorschutzschalter, nach dem Oberbegriff von Anspruch 1.

Aus der Druckschrift DE 10 2006 011 713 A1 ist ein gattungsgemäßer elektronischer Überstromauslöser für Motorschutzschalter bekannt. Der Überstromauslöser weist für jede der zu schaltenden und zu schützenden Stromphasen die Primärseite eines Stromwandlers auf, dessen Sekundärseite über eine Gleichrichteranordnung mit einem Bürdenwiderstand verbunden ist. Im ungesättigten Zustand der Stromwandler sind die Bürdenspannungen ein proportionales Abbild der Phasenströme. Über Glättungsschaltungen gelangen die Bürdenspannungen zu einem Mikrocontroller. An dem Mikrocontroller liegen außerdem die Ausgänge von zwei mehrstufigen Einstellschaltern an. Mit dem ersten Einstellschalter ist ein geeigneter Nennstromwert für die mit dem Schutzschalter verbundene Last wählbar. Mit dem zweiten Einstellschalter wird der Trägheitsgrad für das Auslösen des Schutzschalters gewählt, d.h. mit welchem Verzögerungsgrad eine mit dem Schutzschalter verbundene Last in Abhängigkeit von der Überschreitung des eingestellten Nennstromwertes abgeschaltet werden soll, wenn wenigstens einer der Phasenströme den gewählten Nennstromwert dauernd überschreitet. Die Abschaltung erfolgt umso schneller, je größer die Überschreitung des eingestellten Nennstromwertes ist. In Abhängigkeit der gewählten Einstellungen wird im Mikrocontroller eine entsprechende Überstrom-Auslösekennlinie aktiviert. Beim Auftreten eines Überstromes, d.h. durch Überschreitung des eingestellten Nennstromwertes für eine dem gewählten Trägheitsgrad und dem gemessenen Überstrom entsprechende Verzögerungszeit, wird am Ausgang des Mikrocontrollers ein Auslösesignal abgegeben, das nach Verstärkung einem elektromagnetischen Aktor zugeführt wird, der seinerseits den Schaltmechanismus des Schutzschalters zum Abschalten auslöst. Bei kurzschlussartigen Überströmen wird durch die entsprechende Bürdenspannung über eine Schwellwertschaltung ein Signal an den Mikrocontroller geliefert, was eine Schnellauslösung bewirkt. Vom Ausgang der Gleichrichterschaltungen erfolgt außerdem die Spannungsversorgung für die aktiven elektronischen Bauteile der Auslöseeinheit.

Aus der Druckschrift DE 102 09 068 C1 ist eine Prüfanordnung für derartige elektronische Überstromauslöser eines Schutzschalters bekannt. Die Prüfanordnung enthält eine dem Schutzschalter entsprechende, auf Stromwerte kalibrierte und geprüfte sowie zugleich mit dem Schutzschalter durch die Prüfgröße beaufschlagte Prüfeinheit. Ferner ist eine Überwachungseinheit zur Erfassung und Signalisierung des Auslösens des Überstromauslösers vorgesehen. Hierzu muss die Last vom Schutzschalter getrennt, die Einspeisungs- und Lastanschlüsse aller Stromphasen des Schutzschalters in Reihe geschaltet und von einer Prüfstromquelle beaufschlagt werden. Weiterhin müssen die Sekundärseiten der nun vom gleichen Prüfstrom beaufschlagten Stromwandler des Überstromauslösers zum Teil von den auswertenden Bauelementen des Überstromauslösers getrennt und dagegen mit der Prüfeinheit der Prüfanordnung verbunden werden. Hiermit kann am Einsatzort des Schutzschalters geprüft werden, ob die Wirkungskette zur elektronischen Auslösung funktioniert und die Auslösung innerhalb der zulässigen Toleranzen

Aus der EP 0 774 821 A2 und DE 196 02 122 A1sind andere Prüfanordnungen für derartige elektronische Überstomauslöser eines Schutzschalters bekannt.

Oftmals wird lediglich eine Aussage darüber verlangt, ob am Einsatzort eines Schutzschalters der elektronische Überstromauslöser über die gesamte Wirkungskette funktioniert, ohne mit erheblichem Aufwand für Prüfmittel, Lastabklemmung und Reihenschaltung der Phasenanschlüsse des Schutzschalters sowie Umleitungen der Stromwandlerausgänge quantitative Aussagen über die Einhaltung von Toleranzgrenzen zu gewinnen.

Der Erfindung liegt daher als Aufgabe eine Testanordnung zugrunde, die mit geringem Aufwand an Zeit und Material die Wirkungskette eines elektronischen Überstromauslösers zu testen erlaubt.

Ausgehend von einem elektronischen Überstromauslöser der eingangs genannten Art wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Mit dem erfindungsgemäßen Überstromauslöser wird in üblicher Weise sowohl durch das erste Einstellmittel für die Wahl des Nennstromwertes als auch durch das zweite Einstellmittel für die Wahl des Trägheitsgrades eine softwaremäßig gebildete oder abgespeicherte entsprechende Überstrom-Auslösekennlinie im Mikrocontroller aktiviert. Bei größenmäßiger und zeitmäßige Überschreitung dieser Auslösekennlinie durch wenigstens einen der mittels der Stromwandler erfassten Phasenströme steht am Auslöseausgang des Mikrocontrollers ein Auslösesignal an, wodurch der elektromagnetische Aktor aktiviert ist. Erfindungsgemäß ist das zweite Einstellmittel zusätzlich mit einer Teststellung versehen. In der Teststellung sind im Mikrocontroller ein softwaremäßig gebildeter oder abgespeicherter Teststromwert und eine softwaremäßig gebildete oder abgespeicherte Testverzögerungszeit aktiv. Der Teststromwert ist unabhängig von dem mittels des ersten Einstellmittels gewählten Nennstromwertes unterhalb des minimalen Nennstromwertes festgelegt. Überschreitet wenigstens einer der Phasenströme diesen Teststromwert für mindestens die festgelegte Testverzögerungszeit, steht am Auslösesignalausgang das Auslösesignal an und der elektromagnetische Aktor ist aktiv.

Somit wird in der Teststellung die gesamte Wirkungskette von der Stromerfassung mittels der Stromwandler bis zur Aktivierung der Auslösung mittels des elektromagnetischen Aktors hinsichtlich ihrer Funktionsfähigkeit getestet. Zum Testen der Überstrom-Auslösefunktion des erfindungsgemäßen Überstromauslösers ist keine aufwändige Prüfanordnung erforderlich. Zum Testen sind auch keine vorbereitenden Anschluss- oder Verdrahtungsarbeiten an einem mit dem erfindungsgemäßen Überstromauslöser ausgestatteten Schutzschalter erforderlich, um dessen Phasenanschlüsse zuerst von der Stromeinspeisung und der Last zu trennen und danach seriell mit einer Prüfstromquelle zu beaufschlagen. Ferner sind keine Maßnahmen erforderlich, um die Sekundärseiten der Stromwandler teilweise vom übrigen Überstromauslöser elektrisch zu trennen und mit einer Prüfeinheit zu verbinden. Das Testen erfolgt also ohne externe Prüfmittel und ohne zusätzliche Arbeitsmaßnahmen unmittelbar am Einsatzort und im Einsatzzustand eines mit dem erfindungsgemäßen Überstromauslöser ausgestatteten Schutzschalters.

Es hat sich ein Teststromwert von etwa 80 % des minimalen Nennstromwertes als zweckmäßig herausgestellt.

Vorteilhaft ist ein Wert für Testverzögerungszeit, der größer als diejenige Zeit ist, in der sich die durch die Stromwandler gelieferte Spannungsversorgung für die elektronischen Bauteile zum einwandfreien Funktionieren des elektronischen Überstromauslösers aufbaut. Hierfür hat sich ein Wert für die Testverzögerungszeit von etwa 500 ms als zweckmäßig erwiesen.

Zur Platzeinsparung ist es von Vorteil, wenn die ersten und zweiten Einstellmittel logisch miteinander verschaltet und wechselseitig abfragbar sind.

Weitere Einzelheiten und Vorteile der Erfindung ergeben sich aus dem folgenden, anhand von Figuren erläuterten Ausführungsbeispiel. Es zeigen
- Figur 1:: die Frontalansicht eines erfindungsgemäßen elektronischen Überstromauslösers;
- Figur 2:: das vereinfachte Blockschaltbild des Überstromauslösers nach Fig. 1;
- Figur 3:: eine Detailanordnung des Überstromauslösers nach Fig. 2.

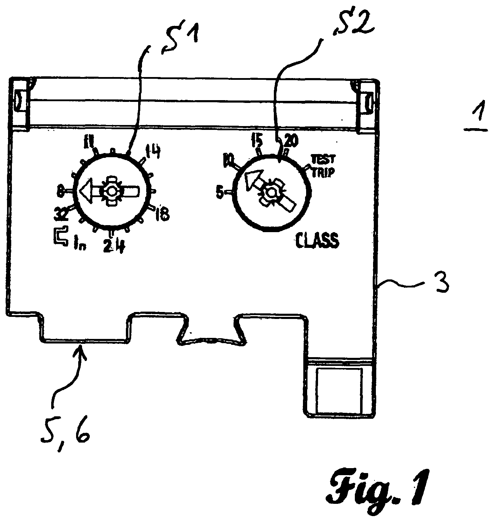

Der elektronische Überstromauslöser 1 nach Fig. 1 ist zum Anbau an einen nicht dargestellten Motorschutzschalter vorgesehen. Das Gehäuse 3 des Überstromauslösers 1 ist in bekannter Weise mit Befestigungs- und Arretierungsmitteln zum Anbau an den Motorschutzschalter ausgestattet. Mit den Bezugszeichen 5 und 6 sind zwei elektrische Kontakte angedeutet, über die ein elektromagnetischer Aktor durch das Gehäuse 3 elektrisch von einem Motorschutzschalter versorgt werden kann. Am Gehäuse 3 ist frontseitig ein erstes Einstellmittel S1 und ein zweites Einstellmittel S2 zugängig. Von den Einstellmitteln S1 und S2 sind jeweils ein mittels eines schraubendreherartigen Hilfsmittels betätigbares Drehelement in Verbindung mit einer zugehörigen Skala zu erkennen. Mit dem ersten Einstellmittel S1 ist der Wert des Nennstromes in sechzehn Stufen wählbar, in diesem Beispiel von einem minimalen Nennstromwert in Höhe von 8 A bis zu einem maximalen Nennstromwert von 32 A. Mit dem zweiten Ein-stellmittel S2 ist der Trägheitsgrad in mehreren Stufen oder eine Teststellung (TEST TRIP) wählbar. Die Wahl des Nennstromwertes und des Trägheitsgrades bestimmen zusammen die Auslösecharakteristik des Überstromauslösers 1.

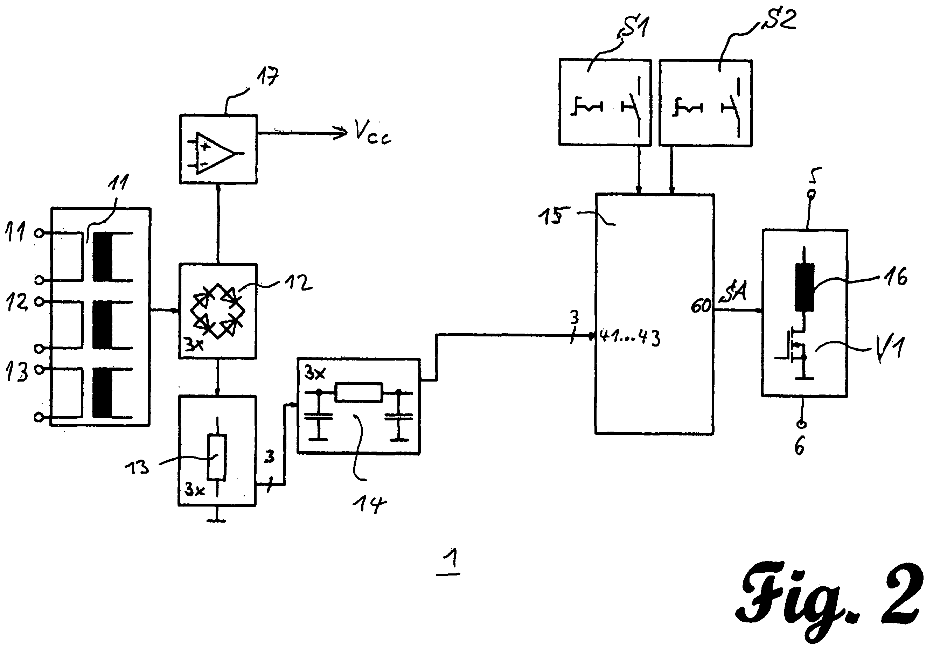

Fig. 2 zeigt die prinzipielle Schaltungsanordnung des Überstromauslösers 1. Die Darstellung in Fig. 2 wurde dahingehend vereinfacht, dass für die Erfindung unwesentliche, im Übrigen bekannte Schaltungsteile, wie zum Beispiel zur Schnellabschaltung bei kurzschlussartigen Phasenströmen oder zur Erzeugung eines sogenannten thermischen Gedächtnisses, nicht dargestellt sind. Mit den von einem Motorschutzschalter geführten drei Phasenströmen I1, I2 und I3 sind die Primärseiten von jeweils einem Stromwandler 11 verkettet. Die sekundärseitigen Ströme der Stromwandler 11 gelangen über jeweils eine Gleichrichteranordnung 12 zu jeweils einem Bürdenwiderstand 13. Im ungesättigten Zustand der Stromwandler 11 sind die Spannungen über die Bürdenwiderstände 13 ein proportionales Abbild der Phasenströme I1, I2, I3. Über Glättungsschaltungen 14 gelangen die Bürdenspannungen an Messeingänge 41 bis 43 eines Mikrocontrollers 15. Zu dem Mikrocontroller 15 werden außerdem die Ausgänge der Einstellmittel S1 und S2 geführt. Entsprechend den gewählten Einstellungen für den Nennstromwert mittels des ersten Einstellmittels S1 sowie für den Trägheitsgrad für die Auslösung mittels des zweiten Einstellmittels S2 wird in dem Mikrocontroller 15 eine bestimmte Überstrom-Auslösekennlinie wirksam. Überschreitet wenigstens einer der Phasenströme I1, I2, I3 in seiner Größe und Dauer diese Auslösekennlinie, entsteht an einem Signalausgang 60 des Mikrocontrollers 15 ein Auslösesignal SA. Das Auslösesignal SA bewirkt über einen Transistorschalter V1 die Aktivierung des elektromagnetischen Aktors 16. Der Aktor 16 betätigt über eine durch das Gehäuse 3 (Fig. 1) reichende Schnittstelle den Schaltmechanismus eines mit dem Auslöser 1 verbundenen Motorschutzschalters in der Weise, dass die Phasenströme I1, I2, I3 unterbrochen werden. Die Versorgung des Aktors 16 erfolgt wie bereits zu Fig. 1 erläutert, über die Kontakte 5 und 6. Mit den Gleichrichteranordnungen 12 ist außerdem ein Netzteil 17 verbunden, das die Elektronik des Überstromauslösers 1 mit der Versorgungsspannung Vcc versorgt.

Wird mit dem zweiten Einstellmittel S2 die Teststellung gewählt, dann wird im Mikrocontroller 15 ein Teststromwert in Höhe von 80 % des minimalen Nennstromwertes wirksam. Im Beispiel ist der Teststromwert 0,8 x 8 A = 6,4 A, und zwar unabhängig von der Stellung des ersten Einstellmittels S1. Weiterhin wird durch die Teststellung im Mikrocontroller 15 eine Testverzögerungszeit von 0,5 s wirksam. Werden in der Teststellung durch Einschalten des mit dem Auslöser verbundenen Motorschutzschalters die Phasenströme I1, I2, I3 aufgeschaltet, werden diese über die Wirkungskette Stromwandler 11, Gleichrichteranordnungen 12, Bürdenwiderstände 13, Glättungsschaltungen 14 und Mikrocontroller 15 erfasst und gemessen. In der Regel betragen die erfassten und gemessenen Phasenströme I1, I2, I3 wenigstens 80 % (im Beispiel 6,4 A oder mehr) des minimalen Nennstromwertes. Nach Ablauf der Testverzögerungszeit von 0,5 s ab Aufschaltung der Phasenströme I1, I2 und I3 wird vom Mikrocontroller 15 ein Auslösesignal SA am Signalausgang 60 ausgegeben, in dessen Folge der Aktor 16 aktiviert und der Motorschutzschalter abgeschaltet wird. Der Funktionstest der gesamtem Wirkungskette von den Stromwandlern 11 bis zum Aktor 16 wäre damit erfolgreich verlaufen. Durch die auslöseverzögernde Testverzögerungszeit von 0,5 s wird sichergestellt, dass sich bis dahin die Versorgungsspannung Vcc soweit aufgebaut hat, dass in dieser Hinsicht eine sichere Funktion des elektronischen Überstromauslösers 1 gewährleistet ist.

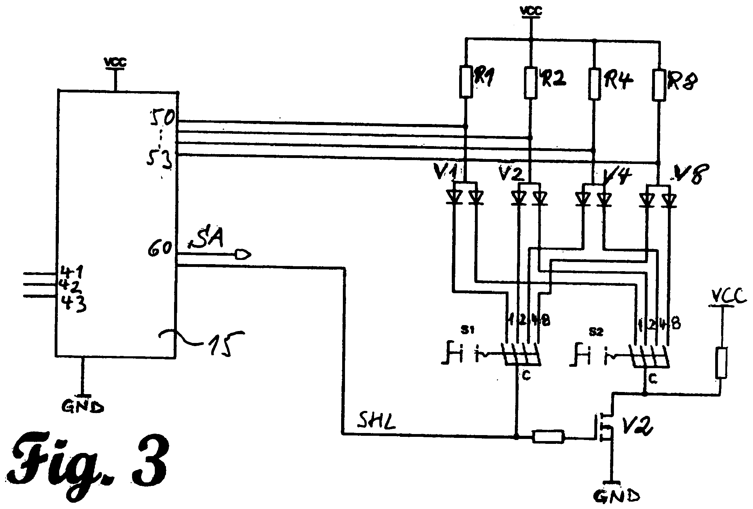

In Fig. 3 ist eine platzsparende Ausgestaltung des ersten und des zweiten Einstellmittel S1 bzw. S2 dargestellt. Das ersten Einstellmittel S1 besteht aus einem dualen 16-stelligen Schalter (Hexadezimalschalter) und das zweite Einstellmittel S2 aus einem 10-stelligen dualen Schalter (Dezimalschalter). Beide Einstellmittel S1, S2 haben jeweils einen Eingang und jeweils vier dual gestufte Ausgänge. Die jeweils gleichwertigen Ausgänge beider Einstellmittel S1, S2 sind über Diodenpaare V1, V2, V4 und V8 und jeweils einen gegen die Versorgungsspannung Vcc liegenden Verknüpfungswiderstand R1, R2, R4 und R8 logisch ODER-verknüpft und an Stelleingänge 50 bis 53 des Mikrocontrollers 15 geführt. Der Mikrocontroller 15 gibt ein ständig zwischen HIGH und LOW wechselndes Abfragesignal SHL direkt an den Eingang des ersten Einstellmittels S1 und mittelbar über eine einen Schalttransistor V2 enthaltende Negationsstufe an das zweite Einstellmittel S2 aus. Damit werden alternierend im Wechsel des Abfragesignals SHL die Dualausgänge des ersten und des zweiten Einstellmittels S1 bzw. S2 aktiv und vom Mikrocomputer 16 über die Stelleingänge 50 bis 53 abgefragt.

### Bezugszeichenliste:

- 1: Überstromauslöser
- 3: Gehäuse
- 5, 6: Kontakte für Aktor
- 11: Stromwandler
- 12: Gleichrichteranordnung
- 13: Bürdenwiderstand
- 14: Glättungsschaltung
- 15: Mikrocontroller
- 16: Aktor
- 17: Netzteil
- 41 ... 43: Messeingänge
- 50 ... 53: Stelleingänge
- 60: Signalausgang

- I1, I2, I3: Phasenströme
- R1, R2, R4, R8: Verknüpfungswiderstände
- SA: Auslösesignal
- S1, S2: Einstellmittel
- Vcc: Versorgungsspannung
- V1, V2, V4, V8: Diodenpaare
- V1: Transistorschalter
- V2: Schalttransistor

## Patentansprüche

1. Elektronischer Überstromauslöser für Schutzschalter, enthaltend
- Stromwandler (11), deren Primärseite mit jeweils einem der zu schaltenden Phasenströme (I1,I2, I3) verkettet ist und deren Sekundärseite jeweils über eine Gleichrichteranordnung (12) mit einem Bürdenwiderstand (13) verbunden ist,
- einen Mikrocontroller (15) mit Messeingängen (41 ... 43), die mit jeweils einem der Bürdenwiderstände (13) wirkverbunden sind, und mit einem Signalausgang (60), der mit einem elektromagnetischen Aktor (16) wirkverbunden ist,
- ein erstes Einstellmittel (S1) zum Wählen eines geeigneten Nennstromwertes, der mit mindestens einem Stelleingang (50 ... 53) des Mikrocontrollers (15) verbunden ist, wobei der Nennstromwert in einem Bereich zwischen einem minimalen Nennstromwert und einem maximalen Nennstromwert wählbar ist,
- ein zweites Einstellmittel (S2) zum Wählen eines geeigneten Trägheitsgrades, der mit mindestens einem Stelleingang (50 ... 53) des Mikrocontrollers (15) verbunden ist,
- mit den Gleichrichteranordnungen (12) verbundene Spannungsversorgungsmittel (17) zur Versorgung der elektronischen Bauteile einschließlich des Mikrocontrollers (15),
- wobei je nach gewählter Einstellung der ersten und zweiten Einstellmittel (S1, S2) im Mikrocontroller (15) eine bestimmte Überstrom-Auslösekennlinie abgebildet ist, bei deren größenmäßiger und zeitlicher Überschreitung durch wenigstens einen der Phasenströme (I1,I2,I3) am Auslösesignalausgang (60) ein Auslösesignal (SA) zur Aktivierung des Aktors (16) zum Abschalten eines mit dem Überstromauslöser (1) verbindbaren Schutzschalters ansteht,
**dadurch gekennzeichnet, dass**
- das zweite Einstellmittel (S2) zusätzlich mit einer Teststellung versehen ist und
- dass mit Wahl der Teststellung im Mikrocontroller (15) ein festgelegter Teststromwert unterhalb des minimalen Nennstromwertes und eine festgelegte Testverzögerungszeit abgebildet sind, bei deren größenmäßiger und zeitlicher Überschreitung durch wenigstens einen der Phasenströme (11, 12, 13) am Auslösesignalausgang (60) ein Auslösesignal (SA) ansteht.

2. Elektronischer Überstromauslöser nach vorstehendem Anspruch, **dadurch gekennzeichnet, dass** der Teststromwert etwa 80 % des minimalen Nennstromwertes beträgt.

3. Elektronischer Überstromauslöser nach einem der vorstehenden Ansprüche, **dadurch gekennzeichnet, dass** die Testverzögerungszeit größer als die Zeit zum Aufbau einer ausreichenden Versorgungsspannung (Vcc) für die elektronischen Bauteile festgelegt ist.

4. Elektronischer Überstromauslöser nach vorstehendem Anspruch, **dadurch gekennzeichnet, dass** die Testverzögerungszeit mit etwa 500 ms beträgt.

5. Elektronischer Überstromauslöser nach einem der vorstehenden Ansprüche, **dadurch gekennzeichnet, dass** die ersten und zweiten Einstellmittel (S1, S2) logisch miteinander kombiniert und wechselseitig abfragbar sind.

## Claims

1. Electronic overcurrent release for circuit breaker, comprising
- a current transformer (11), whose primary side is in each case linked to one of the phase currents (11, 12,13) to be switched and whose secondary side is in each case connected via a rectifier arrangement (12) to a load resistor (13);
- a micro-controller (15) with measurement inputs (41 ... 43), which are each operatively connected to one of the load resistors (13), and have a signal output (60) which is operatively connected to an electromagnetic actuator (16);
- a first adjustment means (S1) for selecting a suitable rated current value connected to at least one set input (50 ... 53) of the micro-controller (15), wherein the rated current value is selectable in a range between a minimum rated current value and a maximum rated current value;
- a second adjustment means (S2) for selecting a suitable degree of inertia connected to at least one set input (50 ... 53) of the micro-controller (15),
- voltage supply means (17) connected to the rectifier arrangements (12) for supplying the electronic components including the micro-controller (15),
- wherein a specific overcurrent tripping characteristic is mapped in the micro-controller (15) depending on the selected setting of the first and second adjustment means (S1, S2), and where a trip signal (SA) is present at the trip signal output (60) for activating the actuator (16) for switching off a circuit breaker which can be connected to the overcurrent release (1), when the magnitude and time of this characteristic are exceeded by at least one of the phase currents (11, 12, 13)
**characterised in that**
- the second adjusting means (S2) is additionally provided with a test position, and
- a fixed test current value below the minimum rated current value and a fixed test delay time are mapped in the micro-controller (15) when the test position is selected, and a trip signal (SA) is present at the trip signal output (60) when the test current value is exceeded in magnitude and time by at least one of the phase currents (11, 12, 13)

2. Electronic overcurrent release according to the preceding claim, **characterised in that** the test current value is approximately 80% of the minimum rated current value.

3. Electronic overcurrent release according to any one of the preceding claims, **characterised in that** the test delay time is set greater than the time for setting up a sufficient supply voltage (Vcc) for the electronic components.

4. Electronic overcurrent release according to the preceding claim, **characterised in that** the test delay time is approximately 500 ms.

5. Electronic overcurrent release according to any one of the preceding claims, **characterised in that** the first and second adjustment means (S1, S2) are logically combined with one another and can be interrogated alternately.

## Revendications

1. Déclencheur électronique à maximum de courant pour disjoncteur de protection, contenant
- des convertisseurs de courant (11), dont le côté primaire est enchaîné avec à chaque fois l'un des courants de phase à commuter (I1, I2, I3) et dont le côté secondaire est relié à chaque fois par l'intermédiaire d'un dispositif redresseur (12) à une résistance de charge (13),
- un microcontrôleur (15) avec des entrées de mesure (41 ... 43), qui sont en liaison active avec à chaque fois l'une des résistances de charge (13), et avec une sortie de signal (60), qui est en liaison active avec un actionneur électromagnétique (16),
- un premier moyen de réglage (S1), pour choisir une valeur de courant nominal appropriée, qui est relié à au moins une entrée de réglage (50 ... 53) du microcontrôleur (15), laquelle valeur de courant nominal peut être choisie dans une plage entre une valeur de courant nominal minimale et une valeur de courant nominal maximale,
- un deuxième moyen de réglage (S2), pour choisir un degré d'inertie approprié, qui est relié à au moins une entrée de réglage (50 ... 53) du microcontrôleur (15),
- des moyens d'alimentation en tension (17), reliés aux dispositifs redresseurs (12), pour alimenter les composants électroniques y compris le microcontrôleur (15),
- dans lequel, selon le réglage choisi des premier et deuxième moyens de réglage (S1, S2) dans le microcontrôleur (15), une certaine courbe caractéristique de déclenchement à maximum de courant est reproduite, lors du dépassement de laquelle, en valeur et en temps, par au moins l'un des courants de phase (I1, I2, I3), un signal de déclenchement (SA) est présent à la sortie de signal de déclenchement (60) en vue de l'activation de l'actionneur (16) pour couper un disjoncteur pouvant être relié au déclencheur à maximum de courant (1),
**caractérisé en ce que**
- le deuxième moyen de réglage (S2) est muni en outre d'une position de test et
- avec le choix de la position de test dans le microcontrôleur (15), une valeur de courant de test fixée en dessous de la valeur de courant nominal minimale et un retard de test fixé sont reproduits, lors du dépassement desquels, en valeur et en temps, par au moins l'un des courants de phase (11, 12, 13), un signal de déclenchement (SA) est présent à la sortie de signal de déclenchement (60).

2. Déclencheur électronique à maximum de courant selon la revendication précédente, **caractérisé en ce que** la valeur de courant de test vaut environ 80% de la valeur de courant nominal minimale.

3. Déclencheur électronique à maximum de courant selon l'une quelconque des revendications précédentes, **caractérisé en ce que** le retard de test est fixé supérieur au temps nécessaire à l'installation d'une tension d'alimentation suffisante (Vcc) pour les composants électroniques.

4. Déclencheur électronique à maximum de courant selon la revendication précédente, **caractérisé en ce que** le retard de test vaut environ 500 ms.

5. Déclencheur électronique à maximum de courant selon l'une quelconque des revendications précédentes, **caractérisé en ce que** les premier et deuxième moyens de réglage (S1, S2) sont combinés entre eux au niveau logique et peuvent être sollicités alternativement.
